# EUROPEAN PATENT APPLICATION

(11) **EP 3 260 869 A1**
(43) Date of publication of application: **27.12.2017**
(21) Application number: 16752182.2
(22) Date of filing: 19.01.2016
(51) Int. Cl.: G01N 35/10

(54) **DETECTION METHOD AND REACTION DEVICE**

(30) Priority: 20.02.2015 JP 2015031692
(71) Applicant: Konica Minolta, Inc., Tokyo 100-7015 (JP)
(72) Inventor: IWASHITA, Atsuo, Tokyo 100-7015 (JP); NODA, Tetsuya, Tokyo 100-7015 (JP); MATSUO, Masataka, Tokyo 100-7015 (JP); MIYAZAKI, Koji, Tokyo 100-7015 (JP); SHOUJI, Yuuya, Tokyo 100-7015 (JP)
(74) Representative: Gille Hrabal
(86) International application number: PCT/JP2016/051343
(87) International publication number: WO 2016/132793

(57) **Abstract**

In a detection method, a first pressure within a pipette tip is measured when air is sucked into or expelled from the leading end of the pipette tip in a state where the leading end of the pipette tip and a reference part of a solid are separated. A second pressure within the pipette tip is measured when air is sucked into or expelled from the leading end of the pipette tip in a state where the leading end of the pipette tip and the reference part of the solid are closer than in the first step. After the first step and second step, the position of the leading end of the pipette tip in relation to the reference part is detected on the basis of the difference between the first pressure measured in the first step and the second pressure measured in the second step.

## Description

### Technical Field

The present invention relates to a method of detecting the position of the tip of a pipette tip that is attached to a pipette nozzle and configured to suck or discharge liquid. In addition, the present invention relates to a reaction apparatus that causes a reaction of two or more substances in a reaction chip including a housing part for housing liquid by use of the pipette tip and the reaction chip.

### Background Art

Highly sensitive and quantitative detection of a minute amount of a detection object substance such as protein and DNA in laboratory tests makes it possible to perform treatment by quickly determining the patient's condition. In view of this, a method and a device which can quantitatively detect a minute amount of a detection object substance with high sensitivity are demanded.

As a method capable of detecting a detection object substance with high sensitivity, a detection method using a surface plasmon resonance (hereinafter also referred to as "SPR") is known (see, for example, PTL 1).

The detection method disclosed in PTL 1 uses a detection chip including a prism composed of a dielectric, a metal film disposed on the prism, and a channel member disposed on the metal film to form a liquid channel. A capturing body for capturing a detection object substance is disposed on the metal film. The channel member includes an injection part for injecting liquid such as a sample including a detection object substance into a liquid channel, and a discharging part for discharging liquid from the liquid channel. The inlet of the injection part and the outlet of the discharging part have shapes complementary to the tip of the pipette tip. Accordingly, when the tip of the pipette tip is inserted to the inlet or the outlet, the tip of the pipette tip and the inlet or the outlet are fit to each other. In this manner, the tip of the pipette tip can be disposed at a constant position with respect to the bottom surface of the liquid channel, and the amount of the liquid in the liquid channel can be highly accurately controlled.

In the detection method disclosed in PTL 1, when a sample including a detection object substance is provided on the metal film of the liquid channel, the detection object substance is captured by the capturing body. In this state, incident light is applied to the metal film through the prism such that surface plasmon resonance is caused. Then, reflection light of the incident light is detected with a detection part to thereby detect the detection object substance.

### Citation List

### Patent Literature

PTL 1 Japanese Patent Application Laid-Open No. 2008-232951

### Summary of Invention

### Technical Problem

In general, in the case where liquid of two types (for example, a reagent and a sample) are mixed in a detection chip (such as a housing chip and a reaction chip), the tip of a pipette tip is placed at a position in the proximity of the bottom surface of a well or a channel in the detection chip, and suction of liquid into in the pipette tip and discharge of liquid from pipette tip are repeated. In this case, from the viewpoint of stabilizing the agitation effect, the positional relationship between the liquid channel or the bottom surface of the well, and the tip of the pipette tip is required to be accurately controlled. In addition, in the case where a plurality of reaction steps including a step of removing liquid are performed in the detection chip, the quantity of the liquid remaining in the liquid channel or the well in the step of removing the liquid is required to be minimized and uniformized from the viewpoint of improving the accuracy of the detection result and stabilizing the reaction efficiency. Also in this case, it is necessary to accurately control the position of the tip of the pipette tip.

In the detection method disclosed in PTL 1, the tip of the pipette tip and the inlet or the outlet are fit to each other, and thus the position of the tip of the pipette tip in the detection chip can be accurately controlled. In the detection method disclosed in PTL 1, however, the tip of the pipette tip and the inlet or the outlet are required to be fit to each other, and consequently the pipette tip and the detection chip is required to be produced with high precision, and accordingly, the manufacturing cost is high. In addition, the pipette tip is required to be highly accurately moved not only in the axial direction (z direction), but also in the direction orthogonal to the axial direction (x direction and y direction), and disadvantageously the manufacturing cost of the detection apparatus is also high.

In view of this, an object of the present invention is to provide a detection method which can accurately detect the position of the tip of the pipette tip without increasing the manufacturing cost of the pipette tip and the housing chip. In addition, another object of the present invention is to provide a reaction apparatus which can appropriately cause a reaction of two or more substances in the reaction chip by accurately controlling the position of the tip of the pipette tip without increasing the manufacturing cost of the pipette tip and the reaction chip.

### Solution to Problem

To solve the above-mentioned problems, a method according to an embodiment of the present invention is intended for detecting a position of a tip of a pipette tip attached to a pipette nozzle and configured to suck or discharge liquid, the method including: measuring a first pressure in the pipette tip at a time of sucking or discharging gas from the tip of the pipette tip in a state where the tip of the pipette tip and a reference part that is a solid are separated from each other; measuring a second pressure in the pipette tip at a time of sucking or discharging gas from the tip of the pipette tip in a state where the tip of the pipette tip and the reference part are brought closer to each other in comparison with the state for measuring the first pressure; and detecting the position of the tip of the pipette tip with respect to the reference part based on a difference between the first pressure and the second pressure after measuring the first pressure and the second pressure.

In addition, to solve the above-mentioned problems, a reaction apparatus according to an embodiment of the present invention is configured to cause a reaction of two or more substances in a reaction chip by use of a pipette tip attached to a pipette nozzle and the reaction chip including a housing part configured to house liquid, the reaction apparatus including: a chip holder configured to hold the reaction chip; a pipette including a pipette nozzle to which the pipette tip is detachably attached; a position information acquiring part including an air pressure sensor configured to measure an air pressure in the pipette tip connected with the pipette nozzle, the position information acquiring part being configured to acquire position information of a tip of the pipette tip; and a pipette movement part configured to move the pipette. The position information acquiring part acquires first position information representing a position of the tip of the pipette tip with respect to a first reference part that is a solid by measuring with the air pressure sensor a variation of the air pressure in the pipette tip at a time when the pipette sucks or discharges gas from the pipette tip while the pipette movement part changes a distance between the tip of the pipette tip and the first reference part; and the pipette movement part moves the pipette based on the first position information to cause a reaction of two or more substances in the reaction chip after the position information acquiring part acquires the first position information.

### Advantageous Effects of Invention

According to the embodiments of the present invention, the amount of liquid in the reaction chip (housing chip) can be highly accurately controlled by accurately controlling the position of the tip of the pipette tip without increasing the manufacturing cost of the pipette tip and the reaction chip (housing chip). For example, according to the embodiments of the present invention, the presence or the amount of a detection object substance can be highly accurately detected.

### Brief Description of Drawings

FIG. 1 is a schematic view illustrating a configuration of an SPFS apparatus according to Embodiment 1;
FIGS. 2A to 2C illustrate a configuration of a detection chip;
FIG. 3 is a cross-sectional schematic view illustrating another exemplary detection chip;
FIG. 4 is a flowchart of an operation of the SPFS apparatus according to Embodiment 1;
FIG. 5A is a flowchart of a step of acquiring first position information, and FIG. 5B is a flowchart of a step of acquiring second position information;
FIG 6A illustrates a configuration of a part of an SPFS apparatus according to Embodiment 2, and FIG. 6B is a flowchart of a step of acquiring first position information in Embodiment 2;
FIG. 7A illustrates a configuration of a part of an SPFS apparatus according to Embodiment 3, and FIG. 7B is a flowchart of a step of acquiring first position information in Embodiment 3;
FIG. 8A illustrates a configuration of a part of an SPFS apparatus according to Embodiment 4, and FIG. 8B is a flowchart of a step of acquiring first position information in Embodiment 4;
FIG. 9A illustrates a configuration of a part of an SPFS apparatus according to Embodiment 5, and FIG. 9B is a flowchart of a step of acquiring first position information in Embodiment 5;
FIG. 10A is a schematic view for describing an experiment apparatus, and FIG. 10B is a flowchart of a step of Experiment 1;
FIG. 11 is a schematic graph showing a relationship between an elapsed time when a pressure is detected with an air pressure sensor, and an output value of the air pressure sensor; and
FIG. 12 is a graph showing a relationship between a distance between a bottom surface of a channel and a pipette tip, and an amount of liquid remaining in a channel.

### Description of Embodiments

Embodiment 1 of the present invention is described below in detail with reference to the accompanying drawings. The following describes a surface plasmon-field enhanced fluorescence spectroscopy (SPFS apparatus) that includes a reaction apparatus according to an embodiment of the present invention, and detects the presence or the amount of a detection object substance in a sample.

### (Embodiment 1)

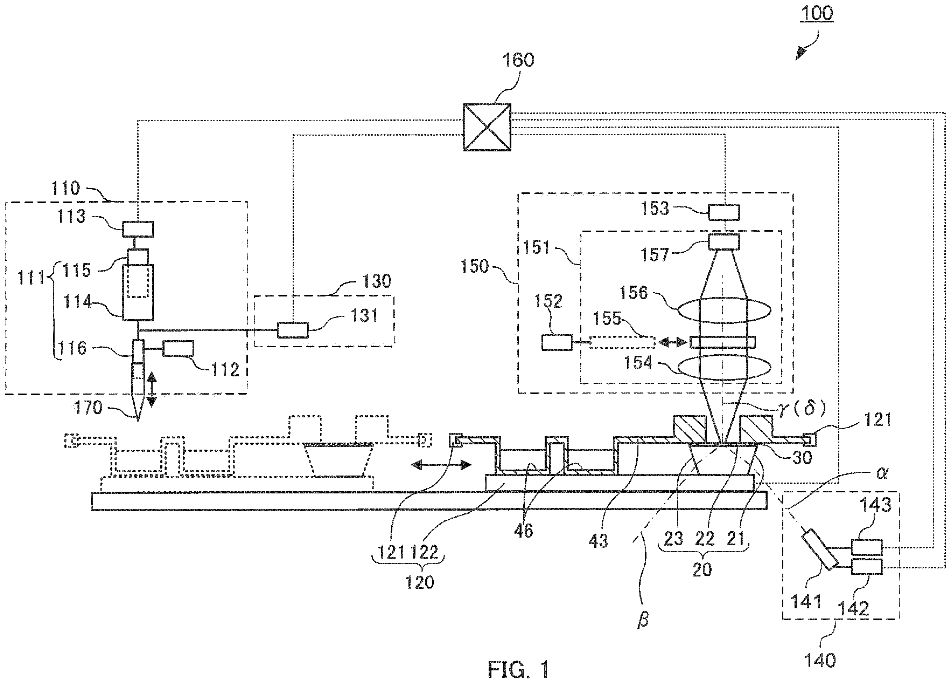

FIG. 1 is a schematic view illustrating a configuration of surface plasmon-field enhanced fluorescence spectroscopy (SPFS apparatus) 100 according to Embodiment 1 of the present invention.

As illustrated in FIG. 1, SPFS apparatus (reaction apparatus) 100 includes liquid feeding part 110 including pipette 111 and pipette movement part 112, conveyance part 120 including chip holder 121, position information acquiring part 130, light irradiation part 140, light detection part 150, and control part 160. SPFS apparatus 100 is used with detection chip (housing chip, reaction chip) 10 attached to chip holder 121. In view of this, detection chip 10 is described first, and thereafter the components of SPFS apparatus 100 are described.

### (Configuration of detection chip)

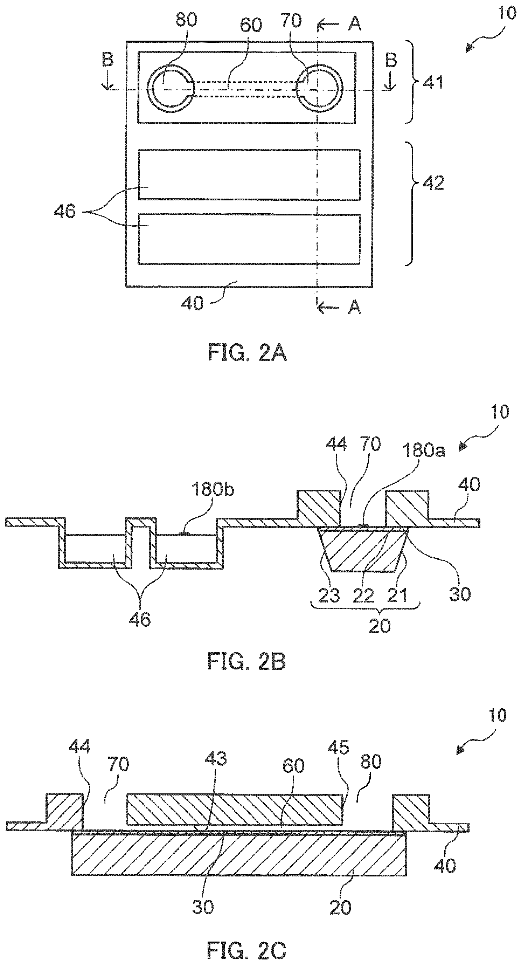

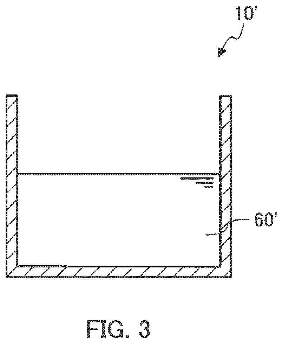

FIGS. 2A to 2C illustrate a configuration of detection chip 10. FIG. 2A is a plan view of detection chip 10, FIG. 2B is a sectional view taken along line A-A of FIG. 2A, and FIG 2C is a sectional view taken along line B-B of FIG. 2A. FIG. 3 is a cross-sectional schematic view illustrating another exemplary detection chip 10.

As illustrated in FIGS. 2A to 2C, detection chip 10 includes prism 20 including incidence surface 21, film formation surface 22 and emission surface 23, metal film 30, and channel closure 40 including reaction region 41 and reagent storage region 42. Metal film 30 and channel closure 40 are disposed on film formation surface 22 of prism 20. Prism 20, metal film 30 and channel closure 40 form channel 60 (housing part) through which liquid flows. Channel 60 is directly disposed on film formation surface 22 of prism 20 or disposed on film formation surface 22 of prism 20 with metal film 30 therebetween. Detection chip 10 may be a reusable chip, or a disposable chip. In the present embodiment, detection chip 10 is a disposable chip. In addition, examples of liquid that flows through channel 60 include a sample including a detection object substance (such as blood, serum, plasma, urine, nasal mucus, saliva, and semen), labeling solution including a capturing body labeled with a fluorescence material, washing solution, and the like.

Prism 20 is composed of an insulator which is transparent to excitation light α. As described above, prism 20 includes incidence surface 21, film formation surface 22 and emission surface 23. Incidence surface 21 is a surface through which excitation light α from light irradiation part 140 enters prism 20. Metal film 30 is disposed on film formation surface 22. In the present embodiment, excitation light α having entered prism 20 is applied to metal film 30 where a detection object substance is captured. Excitation light α is reflected by the rear surface of metal film 30 and becomes reflection light β. To be more specific, excitation light α is reflected by an interface (film formation surface 22) between prism 20 and metal film 30 and becomes reflection light β. Emission surface 23 emits reflection light β to the outside of prism 20.

The shape of prism 20 is not limited. In the present embodiment, the shape of prism 20 is a column whose bottom surface is a trapezoid. The surface corresponding to a bottom side of the trapezoid is film formation surface 22. The surface corresponding to one leg is incidence surface 21, and the surface corresponding to the other leg is emission surface 23. Preferably, the trapezoid serving as the bottom surface is an isosceles trapezoid. With this configuration, incidence surface 21 and emission surface 23 are symmetrical, and the S wave component of excitation light α does not easily remain in prism 20.

Incidence surface 21 is formed such that excitation light α does not return to light irradiation part 140. When excitation light α returns to a laser diode (hereinafter also referred to as "LD") in the case where the light source of excitation light α is the LD, the excitation state of the LD is disturbed, and the wavelength and the output of excitation light α are varied. In view of this, the angle of incidence surface 21 is set within a scanning range around the reinforcement angle such that that excitation light α is not perpendicularly incident on incidence surface 21. Here, the "enhanced angle" is the incident angle at which the quantity of diffusing light (hereinafter referred to as "plasmon scattering light") γ having a wavelength equal to that of excitation light α emitted upward of detection chip 10 is maximized when the incident angle of excitation light α with respect to metal film 30 is scanned. In the present embodiment, each of the angle between incidence surface 21 and film formation surface 22 and the angle between film formation surface 22 and emission surface 23 is approximately 80 degrees.

It is to be noted that, the enhanced angle is roughly determined by the design of detection chip 10. The design factors are the refractive index of prism 20, the refractive index of metal film 30, the film thickness of metal film 30, the extinction coefficient of metal film 30, the wavelength of excitation light α, and the like. While the enhanced angle is shifted by a detection object substance captured on metal film 30, the shift amount is smaller than several degrees.

On the other hand, prism 20 has a birefringence property to a certain degree. Examples of the material of prism 20 include an insulating resin and glass. Preferably, the material of prism 20 is a resin which has a refractive index of 1.4 to 1.6 and causes a small birefringence.

Metal film 30 is disposed to be exposed to at least a part of channel 60 on film formation surface 22 of prism 20. With metal film 30, interaction (SPR) is caused between the photon of excitation light α which is incident on film formation surface 22 under the total reflection condition and the free electron in metal film 30, and thus localized-field light (which is also generally called "evanescent light" or "near-field light") can be generated on the surface of metal film 30.

The material of metal film 30 is not limited as long as the material is a metal which can cause SPR. Examples of the material of metal film 30 include gold, silver, copper, aluminum, and their alloys. In the present embodiment, metal film 30 is a thin film formed of gold. The method of forming metal film 30 is not limited. Examples of the method of forming metal film 30 include sputtering, deposition, and plating. Preferably, the thickness of metal film 30 is, but not limited to, 30 to 70 nm.

In addition, although not illustrated in the drawings, a capturing body for capturing a detection object substance is fixed on the surface of metal film 30. When a capturing body is fixed to metal film 30, the detection object substance can be selectively detected. In the present embodiment, a capturing body is uniformly fixed in a predetermined region on metal film 30. The region where capturing body is fixed is a reaction site where a primary reaction and a secondary reaction described later occur. The capturing body fixed on metal film 30 is exposed to the interior of channel 60. The type of the capturing body is not limited as long as the detection object substance can be captured. In the present embodiment, the capturing body is an antibody specific to the detection object substance or a fragment of the antibody.

Channel closure 40 is disposed on film formation surface 22. As described above, channel closure 40 includes reaction region 41 and reagent storage region 42. Reaction region 41 is a region for performing a primary reaction and a secondary reaction described later. In addition, reagent storage region 42 is a region that stores labeling solution used for the secondary reaction, washing solution used for washing after reactions, and the like. Channel groove 43 that serves as channel (housing part) 60 is formed on the rear surface of reaction region 41 in channel closure 40. In addition, first through hole 44 that serves as injection part 70 and second through hole 45 that serves as storage part 80 open at the front surface and the rear surface of reaction region 41. The both ends of channel groove 43 are connected with first through hole 44 and second through hole 45, respectively. In reagent storage region 42, recess (housing part) 46 that opens at the front surface is formed. The number of recess 46 is not limited. In the present embodiment, two recesses 46 are provided. Labeling solution used for the secondary reaction, washing solution and the like are stored in recess 46. When prism 20, metal film 30 and channel closure 40 are stacked in this order, channel groove 43, first through hole 44 and second through hole 45 serve as channel 60, injection part 70 and storage part 80, respectively.

Preferably, channel closure 40 is formed of a material which is transparent to plasmon scattering light γ and fluorescence δ emitted from metal film 30. Examples of the material of channel closure 40 include a resin. As long as the part for taking out fluorescence δ and plasmon scattering light γ is transparent to fluorescence δ and plasmon scattering light γ, other parts of channel closure 40 may be formed of an opaque material. Channel closure 40 is joined to prism 20 or metal film 30 by bonding using a double-sided tape, adhesive agent and the like, laser welding, ultrasound welding, pressure bonding using a clamp member, and the like, for example.

It is to be noted that, as illustrated in FIG. 3, detection chip 10' may include well 60' in place of channel 60. In the case of detection chip 10', liquid is injected or removed from the opening of well (housing part) 60'.

As illustrated in FIG. 1, excitation light α enters prism 20 from incidence surface 21. Excitation light α having entered prism 20 is applied to metal film 30 at a total reflection angle (an angle at which SPR is caused). By irradiating metal film 30 with excitation light α at an angle at which SPR is caused, localized light can be generated on metal film 30. With this localized light, the fluorescence material for labelling the detection object substance placed on metal film 30 is excited, and fluorescence δ is emitted. By measuring the light amount of fluorescence δ emitted from the fluorescence material, SPFS device 100 detects the presence or the amount of the detection object substance.

### (Configuration of SPFS apparatus)

Next, components of SPFS apparatus 100 according to the present embodiment are described. As described above, SPFS apparatus 100 includes liquid feeding part 110, conveyance part 120, position information acquiring part 130, light irradiation part 140, light detection part 150 and control part 160. Detection chip 10 can be held by chip holder 121 of conveyance part 120.

Liquid feeding part 110 includes pipette 111, pipette movement part 112 and liquid-feeding pump driving mechanism 113. Liquid feeding part 110 injects a sample into channel 60 of detection chip 10 held by chip holder 121, and moves liquid such as labeling solution and washing solution retained in reagent storage region 42 of detection chip 10 into channel 60 of reaction region 41. In addition, liquid feeding part 110 discharges liquid from channel 60, and agitates liquid in channel 60. Liquid feeding part 110 is used with pipette tip 170 attached to pipette nozzle 116 of pipette 111. Preferably, pipette tip 170 is replaceable from the viewpoint of preventing mixture of impurities.

Pipette 111 sucks liquid at the time of injecting liquid to channel 60 and removing liquid from channel 60. Pipette 111 includes syringe 114, plunger 115 capable of reciprocating in syringe 114, and pipette nozzle 116 connected with syringe 114. In addition, with reciprocation of plunger 115, pipette 111 can quantitatively suck and discharge liquid. With this configuration, pipette 111 can inject liquid to channel 60, and remove liquid from channel 60. In addition, pipette 111 can agitate liquid in channel 60 by repeating suction and discharge of liquid.

For suction of liquid into pipette tip 170, and discharge of liquid from pipette tip 170, pipette movement part 112 moves pipette nozzle 116. Pipette movement part 112 freely moves pipette nozzle 116 in the axis direction (for example, the vertical direction) of pipette nozzle 116, for example. Pipette movement part 112 includes a solenoid actuator and a stepping motor, for example.

Liquid-feeding pump driving mechanism 113 moves plunger 115 to suck external liquid into pipette tip 170, and discharge liquid in pipette tip 170 to the outside. Liquid-feeding pump driving mechanism 113 includes a device such as a stepping motor for reciprocating plunger 115. The stepping motor can manage the liquid feeding speed and the liquid feeding amount of the pipette 111, and is therefore preferable from the viewpoint of managing the amount of the liquid remaining in detection chip 10.

As described above, liquid feeding part 110 sucks various types of liquid from recess 46, and injects the liquid into channel 60 of detection chip 10. At this time, when reciprocation of plunger 115 with respect to syringe 114 is repeated in the state where the tip of pipette tip 170 is close to the bottom surface of channel 60 in channel 60, the liquid reciprocates in channel 60 in detection chip 10, and the liquid in channel 60 is agitated. In this manner, uniformization of the density of the liquid, and facilitation of a reaction (for example, a primary reaction and a secondary reaction) in channel 60 can be achieved.

The liquid in channel 60 is again sucked by pipette 111, and discharged to a liquid waste tank and the like not illustrated in the drawings. By repeating the above-mentioned operations, reaction, washing and the like of various types of liquid can be performed, and a detection object substance labeled with a fluorescence material can be placed at a reaction site in channel 60.

Conveyance part 120 conveys detection chip 10 to a detection position or a liquid feeding position, and holds detection chip 10. Here, the "detection position" is a position where light irradiation part 140 applies excitation light α to detection chip 10, and the resulting fluorescence δ or plasmon scattering light γ is detected by light detection part 150. In addition, the "liquid feeding position" is a position where liquid feeding part 110 injects liquid into channel 60 of detection chip 10, or removes liquid from channel 60 of detection chip 10. Conveyance part 120 includes chip holder 121 and conveyance stage 122.

Chip holder 121 is fixed to conveyance stage 122 so as to detachably hold detection chip 10. The shape of chip holder 121 is not limited as long as chip holder 121 can hold detection chip 10 and does not block the light paths of excitation light α, fluorescence δ and plasmon scattering light γ. In the present embodiment, the shape of chip holder 121 is set such that chip holder 121 can hold detection chip 10 with channel closure 40 therebetween.

Conveyance stage 122 moves chip holder 121 in opposite two directions (the horizontal direction in of FIG. 1). Conveyance stage 122 also has a shape which does not block the light paths of excitation light α, fluorescence δ and plasmon scattering light γ. Conveyance stage 122 is driven by a stepping motor and the like, for example.

Position information acquiring part 130 acquires first position information representing the position of the tip of pipette tip 170 with respect to first reference part 180a that is a solid (hereinafter referred to also simply as "first position information"). Position information acquiring part 130 includes air pressure sensor 131. Air pressure sensor 131 is connected between pipette nozzle 116 and syringe 114. The type of air pressure sensor 131 is not limited as long as the air pressure (pressure) in pipette tip 170 can be measured. Examples of the type of air pressure sensor 131 include a mechanical sensor using a Bourdon tube, an electronic sensor using a semiconductor and the like, and the like.

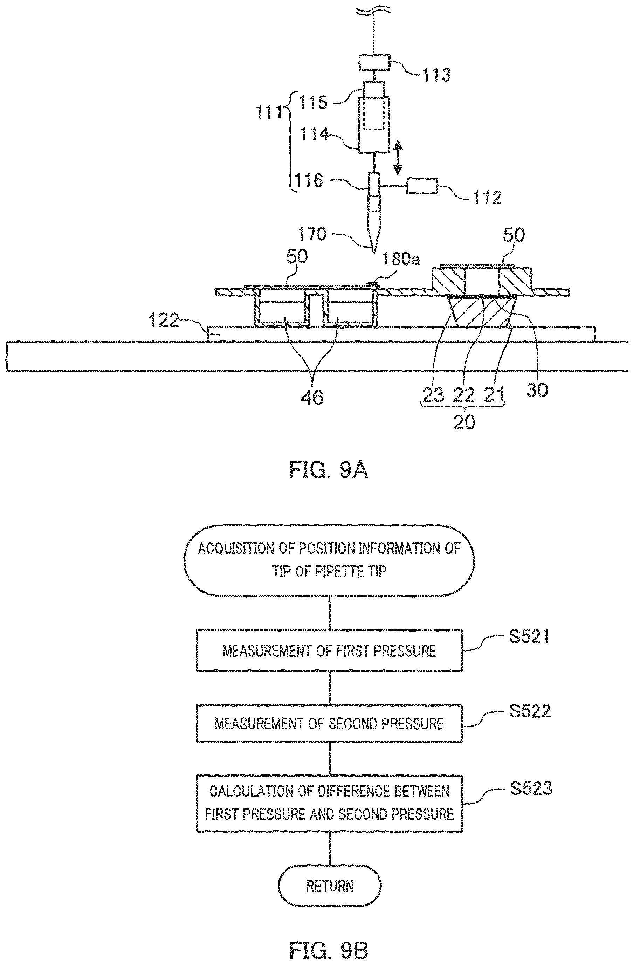

In the present embodiment, the first position information is acquired by changing the distance between the tip of pipette tip 170 and first reference part 180a, and by measuring with air pressure sensor 131 the variation in air pressure in pipette tip 170 at the time of sucking or discharging gas from the tip of pipette tip 170. To be more specific, first, in the state where the tip of pipette tip 170 and first reference part 180a that is a solid are separated from each other, a first pressure in pipette tip 170 at the time of sucking or discharging gas from the tip of pipette tip 170 is measured. Then, in the state where the tip of pipette tip 170 and first reference part 180a that is a solid are brought closer to each other than the state for the measurement of the first pressure, a second pressure in pipette tip 170 at the time of sucking or discharging gas from the tip of pipette tip 170 is measured. Finally, the position of the tip of pipette tip 170 with respect to first reference part 180a is detected based on the difference between the first pressure and the second pressure. Here, the "first reference part" is a reference position of the tip of pipette tip 170 with respect to the solid. First reference part 180a is not limited as long as first reference part 180a is a solid and the position of first reference part 180a is highly accurately specified. First reference part 180a may be a part of detection chip 10, or a part of SPFS apparatus 100. Examples of first reference part 180a included in detection chip 10 include channel closure 40, seal 50 (see FIG 9A), prism 20 (the bottom surface of channel 60) and the like. On the other hand, examples of first reference part 180a included in SPFS apparatus 100 include conveyance stage 122, chip holder 121, the installation surface where conveyance stage 122 is disposed in conveyance part 120 (a part located on the lower side of pipette nozzle 116) and the like. In the operation of acquiring first position information, suction or discharge of gas at the tip of pipette tip 170 may be continuous or intermittent. In addition, in the case where gas is discharged at the time of measuring the first pressure, gas is discharged also at the time of measuring the second pressure. On the other hand, in the case where gas is sucked at the time of measuring the first pressure, gas is sucked also at the time of measuring the second pressure.

In addition, position information acquiring part 130 can acquire second position information representing the position of the tip of pipette tip 170 with respect to second reference part 180b that is liquid (hereinafter referred to also simply as "second position information"). The second position information is acquired by changing the distance between the tip of pipette tip 170 and second reference part 180b, and by measuring with air pressure sensor 131 variation in air pressure in pipette tip 170 at the time of sucking or discharging gas from the tip of pipette tip 170. To be more specific, first, in the state where the tip of pipette tip 170 and second reference part 180b that is liquid are separated from each other, a third pressure in pipette tip 170 at the time of sucking or discharging gas from the tip of pipette tip 170 is measured. Then, in the state where the tip of pipette tip 170 and second reference part 180b that is liquid are brought closer to each other than the state for the measurement of the third pressure, a fourth pressure at the time of sucking or discharging gas from the tip of pipette tip 170 in pipette tip 170 is measured. Finally, the position of the tip of pipette tip 170 with respect to second reference part 180b is detected based on the difference between the third pressure and the fourth pressure. Here, the "second reference part" is a reference position of the tip of pipette tip 170 with respect to liquid. Second reference part 180b is not limited as long as second reference part 180b is liquid, and the position of second reference part 180b is highly accurately specified. Examples of second reference part 180b include the surface of liquid stored in recess 46, the surface of liquid in channel 60, and the like. In the operation of acquiring the second position information, suction or discharge of gas at the tip of pipette tip 170 may be continuous or intermittent.

Preferably, the pressure (the first pressure and the second pressure) of gas which is sucked or discharged from the tip of pipette tip 170 in the operation of acquiring the first position information is different from the pressure of gas (the third pressure and the fourth pressure) which is sucked or discharged from the tip of pipette tip 170 in the operation of acquiring the second position information. To be more specific, preferably, when pipette 111 sucks gas from the tip of pipette tip 170 in the case where position information acquiring part 130 acquires the first position information and the second position information, the pressure (the first pressure and the second pressure) of gas which is sucked from the tip of pipette tip 170 in the operation of acquiring the first position information is lower than the pressure (the third pressure and the fourth pressure) of gas which is sucked from the tip of pipette tip 170 in the operation of acquiring the second position information. In addition, preferably, when pipette 111 discharges gas from the tip of pipette tip 170 in the case where position information acquiring part 130 acquires the first position information and the second position information, the pressure (the first pressure and the second pressure) of gas discharged from the tip of pipette tip 170 in the operation of acquiring the first position information is higher than the pressure (the third pressure and the fourth pressure) of gas discharged from the tip of pipette tip 170 in the operation of acquiring the second position information. As described above, the absolute value of the pressure (the first pressure and the second pressure) of gas in the operation of acquiring the first position information is greater than the absolute value of the pressure (the third pressure and the fourth pressure) of gas in the operation of acquiring the second position information. In the case where the absolute value of the third pressure and the fourth pressure is greater than the absolute value of the first pressure and the second pressure, liquid is scattered from the liquid surface during the measurement of the air pressure, which is not preferable.

Light irradiation part 140 applies excitation light α to incidence surface 21 of detection chip 10 held by chip holder 121. At the time of measurement of fluorescence δ or plasmon scattering light γ, light irradiation part 140 emits only the P wave with respect to metal film 30 toward incidence surface 21 such that the incident angle to metal film 30 is an angle at which SPR is caused. Here, the "excitation light" is light which directly or indirectly excites a fluorescence material. For example, excitation light α is light which generates localized light which excites a fluorescence material on the surface of metal film 30 when it is emitted to metal film 30 through prism 20 at an angle which causes SPR. Light irradiation part 140 includes light source unit 141, angle adjustment mechanism 142 and light source control part 143.

Light source unit 141 emits collimated excitation light α having a constant wavelength and a constant light amount such that the irradiation spot on the rear surface of metal film 30 has a substantially circular shape. Light source unit 141 includes, for example, a light source of excitation light α, a beam shaping optical system, an APC mechanism and a temperature adjustment mechanism (which are not illustrated).

The type of the light source is not limited, and is a laser diode (LD), for example. Other examples of the light source include a light-emitting diode, a mercury lamp, and other laser light sources. In the case where the light emitted from the light source is not a beam, the light emitted from the light source is converted to a beam by a lens, a mirror, a slit or the like. In addition, in the case where the light emitted from the light source is not monochromatic light, the light emitted from the light source is converted to monochromatic light by a diffraction grid or the like. Further, in the case where the light emitted from the light source is not linear polarization, the light emitted from the light source is converted to light of linear polarization by a polarizer or the like.

The beam shaping optical system includes a collimator, a band pass filter, a linear polarization filter, a half-wave plate, a slit, a zooming unit and the like, for example. The beam shaping optical system may include one or more of the above-mentioned components. The collimator collimates excitation light α emitted from the light source. The band pass filter changes excitation light α emitted from the light source to narrowband light composed only of a central wavelength. The reason for this is that excitation light α from the light source has a slight wavelength distribution width. The linear polarization filter changes excitation light α emitted from the light source to linearly polarized light. The half-wave plate adjusts the polarization direction of excitation light α such that the P wave component is incident on metal film 30. The slit and the zooming unit adjust the beam diameter, the outline shape and the like of excitation light α such that the shape of the irradiation spot on the rear surface of metal film 30 has a circular shape having a predetermined size. The APC mechanism controls the light source such that the output of the light source is maintained at a constant value. To be more specific, the APC mechanism detects the light amount of the light diverged from excitation light α by a photodiode not illustrated and the like. Then, the APC mechanism controls the input energy by a recurrent circuit to control the output of the light source at a constant value.

Angle adjustment mechanism 142 adjusts the incident angle of excitation light α with respect to metal film 30 (the interface between prism 20 and metal film 30 (film formation surface 22)). Angle adjustment mechanism 142 relatively rotates the optical axis of excitation light α and chip holder 121 to emit excitation light α at a predetermined incident angle toward a predetermined position of metal film 30 through prism 20.

For example, angle adjustment mechanism 142 turns light source unit 141 around an axis orthogonal to the optical axis of excitation light α (an axis in a perpendicular direction as seen in FIG. 1). At this time, the position of the rotation axis is set such that the position of the irradiation spot on metal film 30 is not substantially moved when the incident angle is scanned. By setting the position of the rotation center at a position near the intersection of the optical axes of two rays of excitation light α at both ends of the scanning range of the incident angle (at a position between the irradiation position on film formation surface 22 and incidence surface 21), the shift of the irradiation position can be minimized.

As described above, in the incident angle of excitation light α with respect to metal film 30, the enhanced angle is an angle at which the quantity of plasmon scattering light γ is maximized. By setting the incident angle of excitation light α to the enhanced angle or an angle approximately equal to the enhanced angle, fluorescence δ having a high intensity can be measured. While the basic incident condition of excitation light α is determined by the material and the shape of prism 20 of detection chip 10, the film thickness of metal film 30, the refractive index of the liquid in channel 60 and the like, the optimum incident condition is slightly varied depending on the type and the amount of the fluorescence material in channel 60, shaping errors of prism 20 and the like. Therefore, it is preferable to determine an optimum reinforcement angle in each measurement.

Light source control part 143 controls components included in light source unit 141 to control emission of excitation light α from light source unit 141. Light source control part 143 is composed of a publicly known computer, microcomputer, or the like including a computation device, a control device, a storage device, and an inputting device, for example.

Light detection part 150 detects the quantity of fluorescence δ emitted from a region around the surface on channel 60 side of metal film 30 when light irradiation part 140 applies excitation light α to metal film 30 of detection chip 10. In addition, as necessary, light detection part 150 also detects plasmon scattering light γ generated by irradiation of metal film 30 with excitation light α. Light detection part 150 includes light reception unit 151, position switching mechanism 152 and sensor control part 153.

Light reception unit 151 is disposed in the direction of the normal to the surface of metal film 30 of detection chip 10. Light reception unit 151 includes first lens 154, optical filter 155, second lens 156 and light receiving sensor 157.

First lens 154 is, for example, a condenser lens, and condenses the light emitted from metal film 30. Second lens 156 is, for example, an image forming lens, and images the light condensed by first lens 154 on the light reception surface of light receiving sensor 157. The light path between first lens 154 and second lens 156 are substantially parallel to each other.

Optical filter 155 is disposed between first lens 154 and second lens 156. Optical filter 155 guides only the fluorescence component to light receiving sensor 157, and removes the excitation light component (plasmon scattering light) in order to detect fluorescence δ with a high S/N ratio. Examples of optical filter 155 include an excitation light reflection filter, a short wavelength cut filter and a band pass filter. Optical filter 155 is, for example, a filter including a multi-layer film that reflects a predetermined light component, or a color glass filter that absorbs a predetermined light component.

Light receiving sensor 157 detects fluorescence δ and plasmon scattering light γ. Light receiving sensor 157 has a high sensitivity such that weak fluorescence δ from a minute amount of detection object substance can be detected. Light receiving sensor 157 is, for example, a photomultiplier tube (PMT), an avalanche photodiode (APD) or the like.

Position switching mechanism 152 switches the position of optical filter 155 between a position on the light path and a position outside the light path in light reception unit 151. To be more specific, optical filter 155 is disposed on the light path of light reception unit 151 when light receiving sensor 157 detects fluorescence δ, and optical filter 155 is disposed at a position outside the light path of light reception unit 151 when light receiving sensor 157 detects plasmon scattering light γ.

Sensor control part 153 controls detection of the output value of light receiving sensor 157, management of the sensitivity of light receiving sensor 157 according to the detected output value, change of the sensitivity of light receiving sensor 157 for obtaining an appropriate output value, and the like. Sensor control part 153 is composed of a publicly known computer, microcomputer, or the like including a computation device, a control device, a storage device, and an inputting device, for example.

Control part 160 controls liquid-feeding pump driving mechanism 113, conveyance stage 122, angle adjustment mechanism 142, light source control part 143, position switching mechanism 152, and sensor control part 153. Control part 160 is composed of a publicly known computer, microcomputer, or the like including a computation device, a control device, a storage device, and an inputting device, for example.

### (Detection operation of SPFS apparatus)

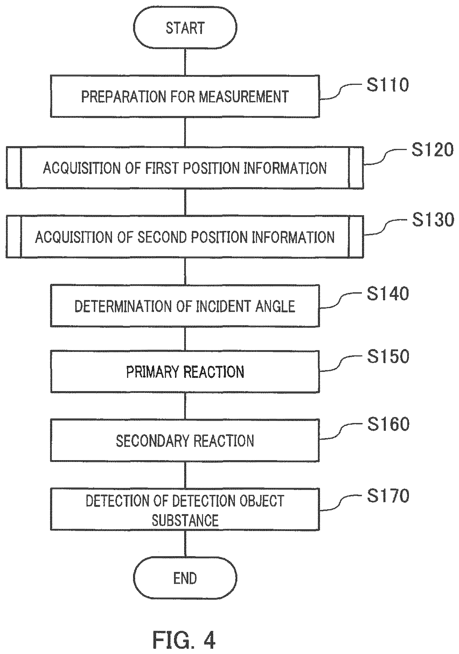

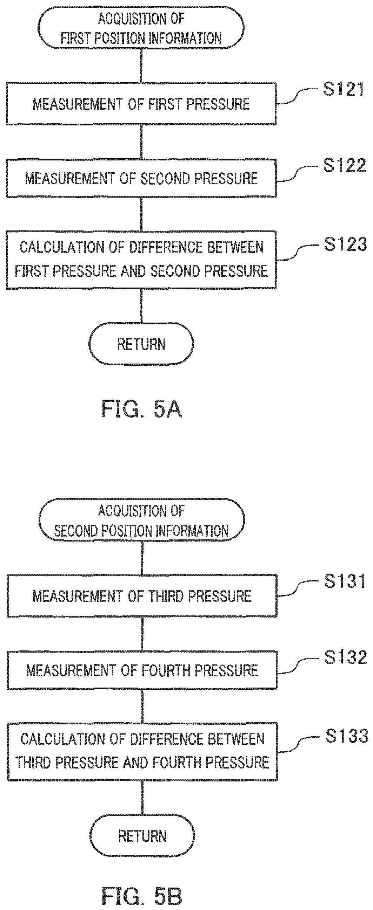

Next, a detection operation for a detection object substance of SPFS apparatus 100 which includes a method of detecting position information of the tip of pipette tip 170 according to Embodiment 1 is described. FIG. 4 is a flowchart of an exemplary operation procedure of SPFS apparatus 100. FIG. 5A is a flowchart of a step of acquiring first position information (step S120 of FIG 4), and FIG. 5B is a flowchart of a step of acquiring second position information (step S130 of FIG. 4). In this example, a primary antibody as a capturing body is fixed on metal film 30. In addition, a secondary antibody labeled with a fluorescence material is used as a capturing body used for fluorescence labelling. Further, first reference part 180a is the bottom surface of channel 60, and second reference part 180b is the surface of liquid stored in recess 46 (see FIG. 2B).

First, preparation for measurement is performed (step S110). To be more specific, detection chip 10 is prepared, and detection chip 10 is installed to chip holder 121 at a setting position of detection chip 10. In addition, pipette tip 170 is attached to an end portion of pipette nozzle 116.

Next, first position information is acquired (step S120). First, a first pressure in pipette tip 170 is measured (step S121). To be more specific, control part 160 drives pipette movement part 112 to move the tip of pipette tip 170 to a position immediately above the bottom surface of channel 60 (first reference part 180a). Then, control part 160 drives liquid-feeding pump driving mechanism 113 to advance plunger 115 with respect to syringe 114, and measure the first pressure in pipette tip 170 with air pressure sensor 131 while continuously ejecting air from the tip of pipette tip 170.

Next, a second pressure in pipette tip 170 is measured (step S122). To be more specific, control part 160 drives pipette movement part 112 to move the tip of pipette tip 170 to the bottom surface side of channel 60 (first reference part 180a) more than the case of the step of measuring the first pressure (step S121). Then, control part 160 drives liquid-feeding pump driving mechanism 113 to advance plunger 115 with respect to syringe 114, and measure the second pressure in pipette tip 170 with air pressure sensor 131 while continuously ejecting air from the tip of pipette tip 170.

Next, the difference between the first pressure and the second pressure is determined (step S123). To be more specific, control part 160 subtracts the second pressure (first pressure) from the first pressure (second pressure) to determine the difference between the first pressure and the second pressure. At this time, until the difference between the first pressure and the second pressure has a value equal to or greater than a predetermined threshold, a step in which pipette movement part 112 is driven to move the tip of pipette tip 170 to the bottom surface (first reference part 180a) side of channel 60 and the second pressure in pipette tip 170 is measured with air pressure sensor 131 is repeated. When a difference is caused between the first pressure and the second pressure, control part 160 determines that the tip of pipette tip 170 is close to first reference part 180a and detects the position of the tip of pipette tip 170 with respect to first reference part 180a. That is, by detecting the air pressure with air pressure sensor 131, control part 160 acquires the first position information of the tip of pipette tip 170 with respect to first reference part 180a.

It is to be noted that, in the step of acquiring the first position information (step S120), the air pressure in pipette tip 170 may be measured with air pressure sensor 131 while continuously or intermittently ejecting air from the tip of pipette tip 170, and bringing the tip of pipette tip 170 close to first reference part 180a. In this case, the air pressure before moving pipette tip 170 is the first pressure. In addition, the air pressure in pipette tip 170 measured with air pressure sensor 131 while bringing the tip of pipette tip 170 close to first reference part 180a is the second pressure. Even in this manner, the first position information can be highly accurately acquired.

It is to be noted that, in the case where a moisturizing agent is present on metal film 30 of detection chip 10, the surface of metal film 30 is required to be washed to remove the moisturizing agent so that the primary antibody can appropriately capture the detection object substance. In this case, the positional accuracy of pipette tip 170 is required also in the operation of removing the washing solution from metal film 30 after metal film 30 is washed. Accordingly, the step of removing the washing solution from metal film 30 is carried out after the first position information is acquired (step S120) and before the incident angle of excitation light α is determined (step S140).

Next, second position information is acquired (step S130). First, a third pressure in pipette tip 170 is measured (step S131). To be more specific, control part 160 drives pipette movement part 112 to move the tip of pipette tip 170 to a position immediately above the surface of liquid retained in recess 46 (second reference part 180b). Then, control part 160 drives liquid-feeding pump driving mechanism 113 to advance plunger 115 with respect to syringe 114, and measure the third pressure in pipette tip 170 with air pressure sensor 131 while continuously ejecting air from the tip of pipette tip 170.

Next, a fourth pressure in pipette tip 170 is measured (step S132). To be more specific, control part 160 drives pipette movement part 112 to move the tip of pipette tip 170 to the surface (second reference part 180b) side of liquid retained in recess 46 more than the step of measuring the third pressure (step S131). Then, control part 160 drives liquid-feeding pump driving mechanism 113 to advance plunger 115 with respect to syringe 114 to measure the fourth pressure in pipette tip 170 with air pressure sensor 131 while continuously ejecting air from the tip of pipette tip 170.

Next, the difference between the third pressure and the fourth pressure is determined (step S133). To be more specific, control part 160 subtracts the fourth pressure (third pressure) from the third pressure (fourth pressure) to determine the difference between the third pressure and the fourth pressure. Then, when a difference is caused between the third pressure and the fourth pressure, control part 160 detects the position of the tip of pipette tip 170 with respect to second reference part 180b. That is, by detecting the air pressure with air pressure sensor 131, control part 160 acquires the second position information of the tip of pipette tip 170 with respect to second reference part 180b. It is to be noted that, also in this case, a step including moving the tip of pipette tip 170 and measuring the second pressure is repeated until the difference between the third pressure and the fourth pressure has a value equal to or greater than a predetermined threshold.

It is to be noted that, in the step of acquiring the second position information (step S130), the pressure in pipette tip 170 may be measured with air pressure sensor 131 while continuously or intermittently ejecting air from the tip of pipette tip 170, and bringing the tip of pipette tip 170 close to second reference part 180b. In this case, the pressure before moving pipette tip 170 is the third pressure. In addition, the pressure in pipette tip 170 measured while bringing the tip of pipette tip 170 close to second reference part 180b with air pressure sensor 131 is the fourth pressure. Even in this manner, the second position information can be highly accurately acquired.

In addition, the order of the step of acquiring the first position information (step S120) and the step of acquiring the second position information (step S130) is not limited to the above-mentioned order. That is, the step of acquiring the first position information (step S120) may be performed after the step of acquiring the second position information (step S130). In addition, in view of reducing the amount of the liquid remaining on metal film 30, it is preferable to acquire at least the first position information before feeding the liquid onto metal film 30. In addition, in view of managing the amount of liquid that adheres on the wall surface of pipette tip 170, it is preferable to also acquire the second position information before feeding the liquid.

Next, the incident angle of excitation light α is determined (step S140). To be more specific, control part 160 operates conveyance stage 122 to move detection chip 10 to the detection position. Then, control part 160 drives sensor control part 153 to detect plasmon scattering light γ with light receiving sensor 157 while scanning the incident angle of excitation light α by driving angle adjustment mechanism 142. Then, the angle at which the quantity of plasmon scattering light γ is maximized is determined to be the incident angle (enhanced angle) of excitation light α.

Next, a reaction between the primary antibody and the detection object substance in the sample is caused (primary reaction; step S150). Control part 160 operates conveyance stage 122 to move the container in which the sample is stored to a position immediately below pipette tip 170. Then, the tip of pipette tip 170 is moved toward the container in which the sample is stored, and the sample is sucked into pipette tip 170. Control part 160 operates conveyance stage 122 to move detection chip 10 to the liquid feeding position. Then, control part 160 drives pipette movement part 112 based on the first position information to move the tip of pipette tip 170 into injection part 70, and inject the sample into channel 60. When the detection object substance is present in the sample, at least a part of the detection object substance is coupled to the primary antibody. After the primary reaction, the sample is removed from channel 60. In this case, the tip of pipette tip 170 is brought close to the bottom surface of channel 60 based on the first position information. Then, the sample is sucked into pipette tip 170 to thereby remove the sample from channel 60.

It is to be noted that the container in which the sample is stored may be disposed in detection chip 10. In this case, a housing hole for housing the container is formed in channel closure 40 of detection chip 10.

It is to be noted that, the type of the sample and the detection object substance is not limited. Examples of the sample include bodily fluids such as blood, serum, plasma, urine, nasal mucus, saliva, and semen, and their diluted solutions. Examples of the detection object substance include nucleic acid (such as DNA and RNA), protein (such as polypeptides and oligopeptides), amino acid, glucide, lipid and modifier molecules thereof.

In addition, in the primary reaction (step S150), the sample may be reciprocated in channel 60. In this case, as with the step of injecting the sample into channel 60, the tip of pipette tip 170 is brought close to the bottom surface of channel 60 based on the first position information. Then, in the state where the position of the tip of pipette tip 170 is fixed, plunger 115 is reciprocated. In this manner, by repeating suction and discharge of the sample with pipette tip 170, the sample can be reciprocated in channel 60. After the sample is reciprocated in channel 60, the sample is sucked into pipette tip 170 to thereby remove the sample from channel 60.

Then, the surface of metal film 30 is washed with washing solution such as buffer solution. Control part 160 moves the tip of pipette tip 170 toward the washing solution in recess 46 to suck the washing solution into pipette tip 170. At this time, since the second position information is highly accurately specified, the distance between the tip of pipette tip 170 and the surface of the washing solution, and the distance between the tip of pipette tip 170 and the bottom surface of recess 46 can also be highly accurately controlled. Accordingly, the washing solution can be appropriately sucked into pipette tip 170. Then, on the basis of the second position information, control part 160 drives pipette movement part 112 to move the tip of pipette tip 170 into injection part 70 and inject the washing solution into channel 60.

Next, the washing solution including the material which has not been coupled with the primary antibody is removed from channel 60. To be more specific, control part 160 drives pipette movement part 112 to move the tip of pipette tip 170 to injection part 70. Then, the tip of pipette tip 170 is brought close to the bottom surface of channel 60 based on the first position information to remove the washing solution from channel 60. At this time, since the tip of pipette tip 170 is brought close to prism 20 (metal film 30) based on the first position information, the amount of the liquid remaining in channel 60 can be minimized. Preferably, the position of the tip of pipette tip 170 at the time of removing the washing solution is identical to the position of the tip of pipette tip 170 at the time of removing the sample from channel 60. In this manner, the amount of the liquid remaining in channel 60 can be kept constant.

Next, the detection object substance captured on metal film 30 is labeled with a fluorescence material (secondary reaction; step S160). To be more specific, control part 160 moves the tip of pipette tip 170 toward recess 46 in which liquid (labeling solution) containing a capturing body labeled with a fluorescence material is retained, to suck the labeling solution into pipette tip 170. At this time, since the second position information is highly accurately specified, the distance between the tip of pipette tip 170 and the surface of the labeling solution, and the distance between the tip of pipette tip 170 and the bottom surface of recess 46 can also be highly accurately detected. Accordingly, the labeling solution can be appropriately sucked into pipette tip 170. Then, control part 160 drives pipette movement part 112 to move the tip of pipette tip 170 into injection part 70 and inject the labeling solution into channel 60. In channel 60, by antigen-antibody reaction, the detection object substance captured on metal film 30 is labeled with the fluorescence material. Thereafter, the labeling solution in channel 60 is removed, and the interior of channel 60 is washed with washing solution. The position of the tip of pipette tip 170 at the time of removing the labeling solution in channel 60 is set based on the first position information. In this manner, the amount of the liquid remaining in channel 60 can be minimized and uniformized.

It is to be noted that, the order of the primary reaction (step S150) and the secondary reaction (step S160) is not limited to the above-mentioned order. For example, it is also possible that, after the detection object substance is coupled with the secondary antibody, liquid containing the composite material thereof is provided onto metal film 30. In addition, it is also possible to simultaneously provide the sample and the fluorescence labeling solution onto metal film 30.

Next, the detection object substance is detected (step S170). To be more specific, control part 160 operates conveyance stage 122 to move detection chip 10 to the detection position. Then, while applying excitation light α to a predetermined position of metal film 30 at the incident angle (enhanced angle) determined at step S120 by driving light source control part 143, sensor control part 153 is driven to control light receiving sensor 157 to detect the intensity of fluorescence δ emitted from metal film 30 (the surface of metal film 30 and the region around the surface of metal film 30).

It is to be noted that control part 160 may measure a blank value before the secondary reaction (step S160). In this case, excitation light α is applied to metal film 30 at the enhanced angle, and the detection value of light receiving sensor 157 is used as a blank value. Then, at the step of detecting the detection object substance (step S170), the blank value is subtracted from the detection value of fluorescence δ to calculate the amount of fluorescence δ representing the amount of the detection object substance in the sample.

### (Effect)

As described above, SPFS apparatus 100 according to the present embodiment operates pipette tip 170 based on the first position information representing the position of the tip of pipette tip 170, and thus can highly accurately control the position of the tip of pipette tip 170. In addition, with this configuration, by uniformizing the amount of the liquid remaining in channel 60, the accuracy of the detection result can be improved.

In addition, first reference part 180a is the bottom surface of channel 60 in SPFS apparatus 100 according to the present embodiment, and therefore the tip of pipette tip 170 can be highly accurately controlled in comparison with Embodiments 2 to 5 since the operation at the bottom surface of channel 60 requires the highest accuracy.

### (Embodiment 2)

An SPFS device according to Embodiment 2 is different from SPFS device 100 according to Embodiment 1 in the configuration of first reference part 180a. Therefore, the components same as those of SPFS apparatus 100 according to Embodiment 1 are denoted with the same reference numerals, and description thereof is omitted, and, components different from those of detection apparatus 100 are mainly described.

### (Configuration of SPFS apparatus)

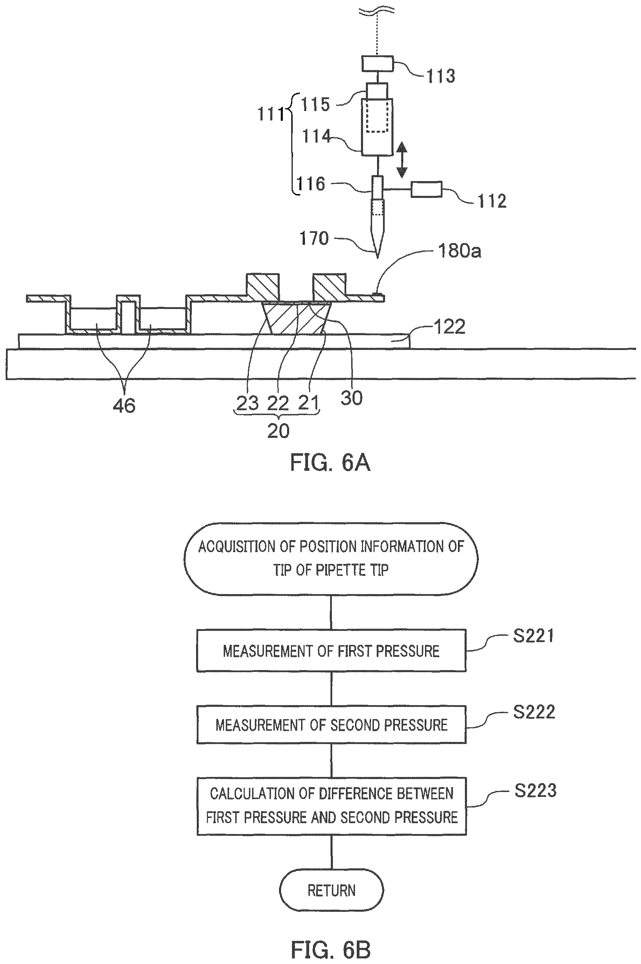

FIG. 6A illustrates a configuration of a part of the SPFS apparatus according to Embodiment 2.

As illustrated in FIG. 6A, first reference part 180a in Embodiment 2 is the top surface of detection chip (housing chip) 10. To acquire the first position information of the tip of pipette tip 170, first, the first pressure in pipette tip 170 at the time of sucking or discharging gas from the tip of pipette tip 170 is measured in the state where the tip of pipette tip 170 and first reference part 180a that is a solid (the top surface of detection chip 10) are separated from each other. Then, in the state where the tip of pipette tip 170 and first reference part 180a (the top surface of detection chip 10) are brought close to each other, the second pressure in pipette tip 170 at the time of sucking or discharging gas from the tip of pipette tip 170 is measured. Finally, the first position information of the tip of pipette tip 170 with respect to first reference part 180a is acquired based on the difference between the first pressure and the second pressure.

### (Detection operation of SPFS apparatus)

Next, regarding a detection operation of the SPFS apparatus which includes a method according to Embodiment 2, steps different from the detection operation of SPFS apparatus 100 according to Embodiment 1 are mainly described.

FIG. 6B is a flowchart of a step of acquiring first position information in Embodiment 2.

As illustrated in FIG. 6B, in a step of acquiring first position information representing the tip of pipette tip 170 in Embodiment 2, first, control part 160 drives pipette movement part 112 to move the tip of pipette tip 170 to a position immediately above the top surface of detection chip 10 (first reference part 180a). Then, control part 160 drives liquid-feeding pump driving mechanism 113 to advance plunger 115 with respect to syringe 114, and measure the first pressure in pipette tip 170 with air pressure sensor 131 while continuously ejecting air from the tip of pipette tip 170 (step S221).

Next, the second pressure in pipette tip 170 is measured (step S222). To be more specific, control part 160 drives pipette movement part 112 to move the tip of pipette tip 170 to the top surface of detection chip 10 (first reference part 180a) side more than the step of measuring the first pressure (step S221). Then, control part 160 drives liquid-feeding pump driving mechanism 113 to advance plunger 115 with respect to syringe 114, and measure the second pressure in pipette tip 170 with air pressure sensor 131 while continuously ejecting air from the tip of pipette tip 170.

Next, the difference between the first pressure and the second pressure is determined (step S223). To be more specific, control part 160 subtracts the second pressure (first pressure) from the first pressure (second pressure) to determine the difference between the first pressure and the second pressure. When a difference is caused between the first pressure and the second pressure, control part 160 acquires the first position information of the tip of pipette tip 170 with respect to first reference part 180a.

### (Effect)

As described above, the SPFS apparatus according to Embodiment 2 has an effect similar to that of SPFS apparatus 100 according to Embodiment 1.

### (Embodiment 3)

An SPFS apparatus according to Embodiment 3 is different from SPFS apparatus 100 according to Embodiment 1 in first reference part 180a. Therefore, the components same as those of SPFS apparatus 100 according to Embodiment 1 are denoted with the same reference numerals and description thereof is omitted, and, components different from those of detection apparatus 100 are mainly described.

### (Configuration of SPFS apparatus)

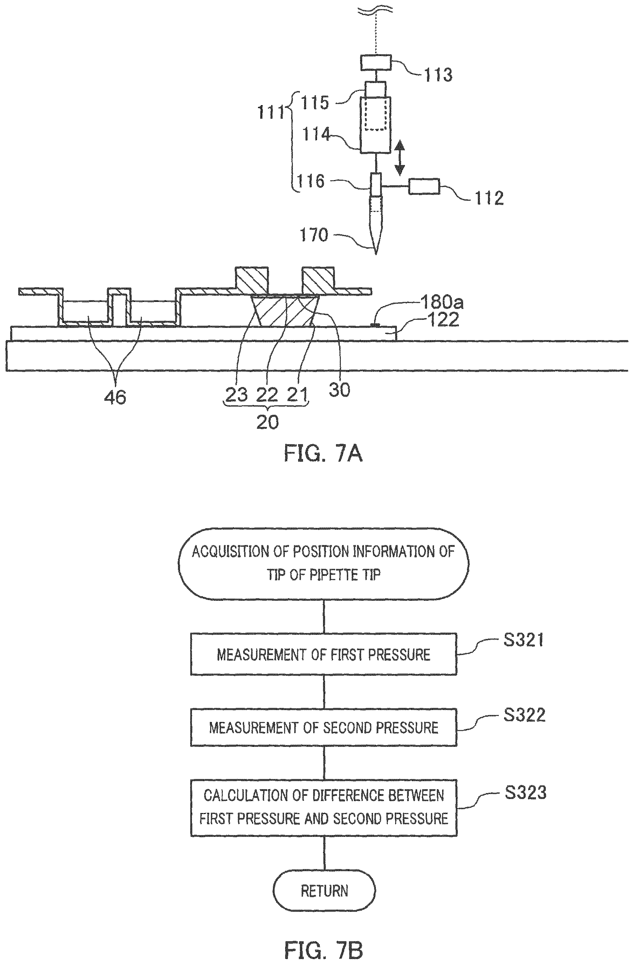

FIG. 7A illustrates a configuration of a part of the SPFS apparatus according to Embodiment 3.

As illustrated in FIG. 7A, first reference part 180a in Embodiment 3 is a part of conveyance stage 122 for conveying a detection chip. To acquire the first position information of the tip of pipette tip 170, first, in the state where the tip of pipette tip 170 and first reference part 180a that is a solid (a part of conveyance stage 122) are separated from each other, the first pressure in pipette tip 170 at the time of sucking or discharging gas from the tip of pipette tip 170 is measured. Then, in the state where the tip of pipette tip 170 and first reference part 180a are close to each other, the second pressure in pipette tip 170 at the time of sucking or discharging gas from the tip of pipette tip 170 is measured. Finally, the first position information of the tip of pipette tip 170 with respect to first reference part 180a is acquired based on the difference between the first pressure and the second pressure.

### (Detection operation of SPFS apparatus)

Next, regarding a detection operation of the SPFS apparatus which includes a method according to Embodiment 3, steps different from the detection operation of SPFS apparatus 100 according to Embodiment 1 are mainly described.

FIG. 7B is a flowchart of a step of acquiring first position information in Embodiment 3.

As illustrated in FIG. 7B, in the step of acquiring the first position information of the tip of pipette tip 170 in Embodiment 3, first, control part 160 drives pipette movement part 112 to move the tip of pipette tip 170 to a position immediately above conveyance stage 122 (reference part 180). Then, control part 160 drives liquid-feeding pump driving mechanism 113 to advance plunger 115 with respect to syringe 114, and measure the first pressure in pipette tip 170 with air pressure sensor 131 while continuously ejecting air from the tip of pipette tip 170 (step S321).

Next, the second pressure in pipette tip 170 is measured (step S322). To be more specific, control part 160 drives pipette movement part 112 to move the tip of pipette tip 170 to conveyance stage 122 (reference part 180) side more than the step of measuring the first pressure (step S321). Then, control part 160 drives liquid-feeding pump driving mechanism 113 to advance plunger 115 with respect to syringe 114, and measure the second pressure in pipette tip 170 with air pressure sensor 131 while continuously ejecting air from the tip of pipette tip 170.

Next, the difference between the first pressure and the second pressure is determined (step S323). To be more specific, control part 160 subtracts the second pressure (first pressure) from the first pressure (second pressure) to determine the difference between the first pressure and the second pressure. When a difference is caused between the first pressure and the second pressure, control part 160 acquires the first position information of the tip of pipette tip 170 with respect to reference part 180.

### (Effect)

As described above, the SPFS apparatus according to Embodiment 3 has an effect similar to that of SPFS apparatus 100 according to Embodiment 1.

### (Embodiment 4)

A SPFS apparatus according to Embodiment 4 is different from SPFS apparatus 100 according to Embodiment 1 in first reference part 180a. Therefore, the components same as those of SPFS apparatus 100 according to Embodiment 1 are denoted with the same reference numerals and description thereof is omitted, and, components different from those of detection apparatus 100 are mainly described.

### (Configuration of SPFS apparatus)

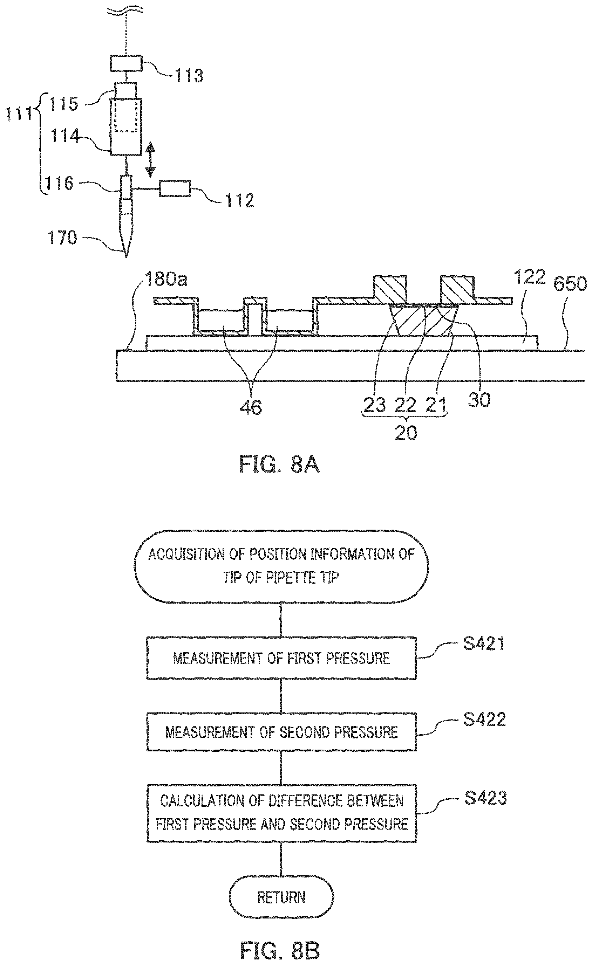

FIG. 8A illustrates a configuration of a part of the SPFS apparatus according to Embodiment 4.

As illustrated in FIG. 8A, first reference part 180a in Embodiment 4 is a part of installation surface 650 on which to dispose conveyance stage 122 that conveys detection chip 10 that holds detection chip hold. To acquire the first position information of the tip of pipette tip 170, first, in the state where the tip of pipette tip 170 and first reference part 180a that is a solid (a part of installation surface 650) are separated from each other, the first pressure in pipette tip 170 at the time of sucking or discharging gas from the tip of pipette tip 170 is measured. Then, in the state where the tip of pipette tip 170 and first reference part 180a are brought close to each other, the second pressure in pipette tip 170 at the time of sucking or discharging gas from the tip of pipette tip 170 is measured. Finally, the first position information of the tip of pipette tip 170 with respect to first reference part 180a is acquired based on the difference between the first pressure and the second pressure.

### (Detection operation of SPFS apparatus)

Next, regarding a detection operation of the SPFS apparatus which includes a method according to Embodiment 4, steps different from the detection operation of SPFS apparatus 100 according to Embodiment 1 are mainly described.

FIG. 8B is a flowchart of a step of acquiring first position information in Embodiment 4.

As illustrated in FIG. 8B, in the step of acquiring the first position information of the tip of pipette tip 170 in Embodiment 4, first, control part 160 drives pipette movement part 112 to move the tip of pipette tip 170 to a position immediately above a part of installation surface 650 (reference part 180). Then, control part 160 drives liquid-feeding pump driving mechanism 113 to advance plunger 115 with respect to syringe 114, and measure the first pressure in pipette tip 170 with air pressure sensor 131 while continuously ejecting air from the tip of pipette tip 170 (step S421).

Next, the second pressure in pipette tip 170 is measured (step S422). To be more specific, control part 160 drives pipette movement part 112 to move the tip of pipette tip 170 to the side of the part of installation surface 650 (reference part 180) more than the step of measuring the first pressure (step S421). Then, control part 160 drives liquid-feeding pump driving mechanism 113 to advance plunger 115 with respect to syringe 114, and measure the second pressure in pipette tip 170 with air pressure sensor 131 while continuously ejecting air from the tip of pipette tip 170.

Next, the difference between the first pressure and the second pressure is determined (step S423). To be more specific, control part 160 subtracts the second pressure (first pressure) from the first pressure (second pressure) to determine the difference between the first pressure and the second pressure. Then, when a difference is caused between the first pressure and the second pressure, the first position information of the tip of pipette tip 170 with respect to reference part 180 is acquired.

### (Effect)

As described above, the SPFS apparatus according to Embodiment 4 has an effect similar to that of SPFS apparatus 100 according to Embodiment 1.

### (Embodiment 5)

An SPFS apparatus according to Embodiment 5 is different from SPFS apparatus 100 according to Embodiment 1 in first reference part 180a. Therefore, the components same as those of SPFS apparatus 100 according to Embodiment 1 are denoted with the same reference numerals and description thereof is omitted, and, components different from those of detection apparatus 100 are mainly described.

### (Configuration of SPFS apparatus)

FIG. 9A illustrates a configuration of a part of the SPFS apparatus according to Embodiment 5.

As illustrated in FIG 9A, first reference part 180a in Embodiment 5 is seal 50 of detection chip 10. Detection chip 10 according to Embodiment 5 includes prism 20, metal film 30, channel closure 40 and seal 50. Seal 50 seals openings of injection part 70, storage part 80 and four recesses 46.

To acquire the first position information of the tip of pipette tip 170, first, in the state where the tip of pipette tip 170 and first reference part 180a that is a solid (a part of seal 50) are separated from each other, the first pressure in pipette tip 170 at the time of sucking or discharging gas from the tip of pipette tip 170 is measured. Then, in the state where the tip of pipette tip 170 and first reference part 180a are brought close to each other, the second pressure in pipette tip 170 at the time of sucking or discharging gas from the tip of pipette tip 170 is measured. Finally, the first position information of the tip of pipette tip 170 with respect to first reference part 180a is acquired based on the difference between the first pressure and the second pressure.

### (Detection operation of SPFS apparatus)

Next, regarding a detection operation of the SPFS apparatus which includes a method according to Embodiment 5, steps different from the detection operation of SPFS apparatus 100 according to Embodiment 1 are mainly described.

FIG. 9B is a flowchart of a step of acquiring first position information in Embodiment 5.

As illustrated in FIG. 9B, in the step of acquiring the first position information of the tip of pipette tip 170 in Embodiment 5, first, control part 160 drives pipette movement part 112 to move the tip of pipette tip 170 to a position immediately above a part of seal 50 (reference part 180). Then, control part 160 drives liquid-feeding pump driving mechanism 113 to advance plunger 115 with respect to syringe 114, and measure the first pressure in pipette tip 170 with air pressure sensor 131 while continuously ejecting air from the tip of pipette tip 170 (step S521).

Next, the second pressure in pipette tip 170 is measured (step S522). To be more specific, control part 160 drives pipette movement part 112 to move the tip of pipette tip 170 to the side of the part of seal 50 (reference part 180) more than the step of measuring the first pressure (step S521). Then, control part 160 drives liquid-feeding pump driving mechanism 113 to advance plunger 115 with respect to syringe 114, and measure the second pressure in pipette tip 170 with air pressure sensor 131 while continuously ejecting air from the tip of pipette tip 170.

Next, the difference between the first pressure and the second pressure is determined (step S523). To be more specific, control part 160 subtracts the second pressure (first pressure) from the first pressure (second pressure) to determine the difference between the first pressure and the second pressure. Then, when a difference is caused between the first pressure and the second pressure, the first position information of the tip of pipette tip 170 with respect to reference part 180 is acquired.

### (Effect)

As described above, the SPFS apparatus according to Embodiment 5 has an effect similar to that of SPFS apparatus 100 according to Embodiment 1.

It is to be noted that, the SPFS apparatus according to Embodiments 1 to 5 may be provided with a buffering member (for example, a rubber) for buffering the impact against pipette tip 170 at the time when the tip of pipette tip 170 makes contact with first reference part 180a.

### (Reference experiments)

Next, the following experiments were conducted to confirm the detection of the position of the tip of pipette tip 170 with the SPFS apparatuses of the embodiments. In the experiments, an experiment apparatus having a configuration similar to that of liquid feeding part 110 of SPFS apparatus 100 illustrated in FIG. 1 was used.

### (Experiment 1)

In Experiment 1, an examination was conducted to confirm whether the output value of air pressure sensor 131 connected with pipette nozzle 116 is changed at the time when pipette tip 170 attached to pipette nozzle 116 is moved toward first reference part 180a that is a solid.

As first reference part 180a that is a solid, a gage block (MITUTOYO Corp.) was used. As pipette tip 170, a pipette tip available from THERMO FISHER SCIENTIFIC Corp. (having a capacity of 300 µL) was used. As air pressure sensor 131, a semiconductor pressure sensor of a substrate type (FREESCALE SEMICONDUCTOR JAPAN Corp.) was used. The flow velocity (corresponding to the pressure of the gas discharged from the tip of pipette tip 170) of the gas discharged from the tip of pipette tip 170 was set to 8.3 µL/sec.

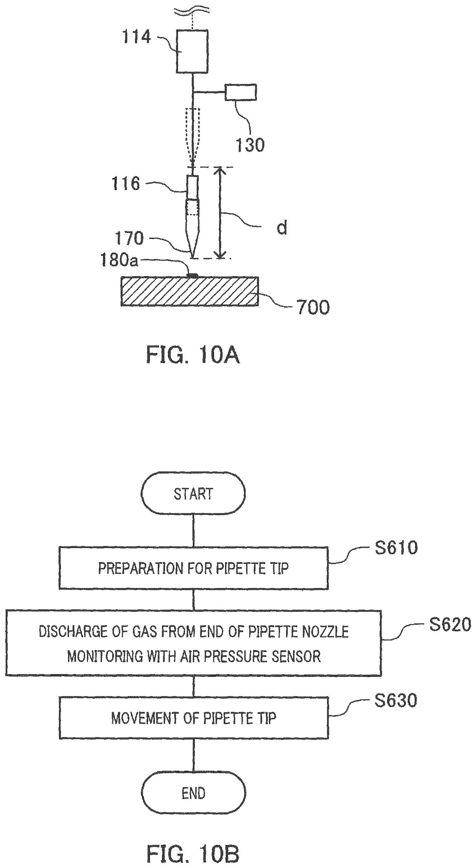

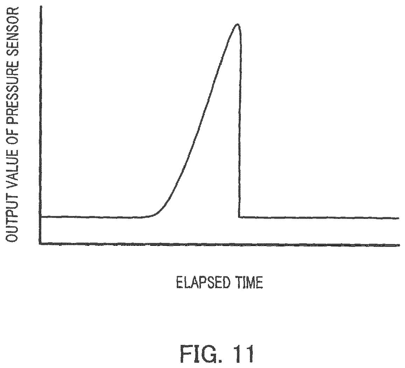

FIG. 10A is a schematic view for describing the experiment apparatus, and FIG. 10B is a flowchart of the steps of Experiment 1. FIG. 11 is a schematic graph showing a relationship between an output value of air pressure sensor 131 and an elapsed time at the time when an air pressure is detected by air pressure sensor 131.

As illustrated in FIG. 10A and FIG. 10B, in Experiment 1, pipette tip 170 was attached at first (step S610). To be more specific, pipette tip 170 was attached to pipette nozzle 116 whose axis is aligned with the normal to the surface of gage block 700.

Next, gas was discharged from the tip of pipette tip 170 (step S620). To be more specific, plunger 115 was advanced with respect to syringe 114 to thereby discharge gas from the tip of pipette tip 170. At this time, the air pressure in pipette tip 170 was monitored with air pressure sensor 131.

Next, pipette tip 170 was moved (step S630). To be more specific, pipette movement part 112 was driven to move pipette tip 170 toward gage block 700. It is to be noted that, also at this time, the air pressure in pipette tip 170 was monitored with air pressure sensor 131 while ejecting gas from the tip of pipette tip 170.

Table 1 shows a relationship between the movement distance of the pipette tip (see d in FIG. 10A) and the output value of air pressure sensor 131. It is to be noted that, in Experiment 1, the same operation was conducted three times (Tests 1 to 3).

**[Table 1]**

| Movement distance of pipette tip (mm) | Output value of air pressure sensor (mV) | | |
|---|---|---|---|
| | Test 1 | Test 2 | Test 3 |
| 7.08 | 10 | 10 | 10 |
| 7.10 | 10 | 10 | 10 |
| 7.12 | 103 | 135 | 15 |
| 7.14 | 324 | 293 | 273 |
| 7.16 | 315 | 345 | 375 |

As shown in Table 1 and FIG. 11, in Tests 1 to 3, when the tip of pipette tip 170 was brought close to gage block 700, the output value of air pressure sensor 131 was increased. The reason for this is considered that, the ease of discharging of gas from the tip of pipette tip 170 is reduced because the tip of pipette tip 170 and gage block 700 are brought close to each other. It is to be noted that, in FIG. 11, when the air pressure exceeds a certain value, the air pressure is abruptly reduced. The reason for this is that discharging of gas from the tip of pipette tip 170 is stopped.

### (Experiment 2)

Next, whether increase in output value of air pressure sensor 131 in Experiment 1 was caused by the tip of pipette tip 170 brought close to the surface of gage block 700 (first reference part 180a) was examined.

In Experiment 2, 20 µL of ink was attached to a portion immediately below pipette tip 170 in gage block 700. Other experiment conditions were identical to the conditions of Experiment 1.

Table 2 shows a relationship between the movement distance of the pipette tip (see d of FIG. 10A), the output value of air pressure sensor 131, and adhesion of ink to the tip of pipette tip 170. It is to be noted that, in Experiment 2, the same operation was conducted three times (Tests 4 to 6).

**[Table 2]**

| Movement distance of pipette tip (mm) | Output value of air pressure sensor (mV) | | | Adhesion of ink | | |
|---|---|---|---|---|---|---|
| | Test 4 | Test 5 | Test 6 | Test 4 | Test 5 | Test 6 |
| 7.08 | 10 | 10 | 10 | not adhered | not adhered | not adhered |
| 7.10 | 10 | 10 | 10 | not adhered | not adhered | not adhered |
| 7.12 | 299 | 249 | 159 | adhered | adhered | adhered |
| 7.14 | 399 | 363 | 353 | adhered | adhered | adhered |

As shown in Table 2, in Tests 4 to 6 of Experiment 2, the output value of air pressure sensor 131 was largely increased when the movement distance of pipette tip 170 was 7.12 mm as with Experiment 1 (see Table 1). In addition, it was confirmed that the ink was adhered to the tip of pipette tip 170 when the movement distance of pipette tip 170 was 7.12 mm. From these results, it was confirmed that the output value of air pressure sensor 131 increases when the tip of pipette tip 170 and gage block 700 is brought close to each other such that the ink is attached to the tip of pipette tip 170.

### (Experiment 3)

In Experiment 3, the examination was conducted to confirm whether the output value of air pressure sensor 131 connected with pipette nozzle 116 is changed when pipette tip 170 attached to pipette nozzle 116 was moved toward first reference part 180a that is the bottom surface of channel 60 of detection chip 10 illustrated in FIG. 2. Other experiment conditions were identical to the conditions of Experiment 1.

Table 3 shows a relationship between the movement distance (see d of FIG. 10A) of the pipette tip and the output value of air pressure sensor 131. It is to be noted that, in Experiment 3, the same operation was conducted three times (Tests 7 to 9).

**[Table 3]**

| Movement distance of pipette tip (mm) | Output value of air pressure sensor (mV) | | |
|---|---|---|---|
| | Test 7 | Test 8 | Test 9 |
| 8.24 | 10 | 10 | 10 |
| 8.26 | 10 | 10 | 10 |
| 8.28 | 10 | 27 | 10 |
| 8.30 | 43 | 223 | 223 |
| 8.32 | 419 | 236 | 383 |
| 8.34 | 293 | 323 | 363 |

As shown in table 3, in Tests 7 to 9 of Experiment 3, the output value of air pressure sensor 131 was increased. This indicates that the position of the tip of pipette tip 170 can be accurately detected in inlet 70 of detection chip 10.

### (Experiment 4)

In Experiment 4, the relationship between the distance between the bottom surface of channel 60 and the tip of pipette tip 170, and the amount of liquid remaining in channel 60 was examined.

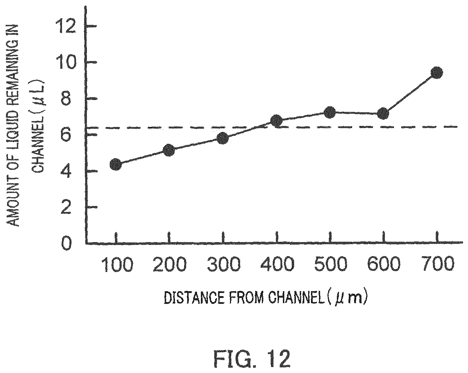

In Experiment 4, first, a predetermined amount of liquid was injected into channel 60. Next, with the distance between the bottom surface of channel 60 and the tip of pipette tip 170 set to a predetermined distance, the liquid in channel 60 was removed, and the amount of the liquid remaining in channel 60 was measured. It is to be noted that, the amount of the liquid remaining in channel 60 was determined by subtracting the weight of blank detection chip 10 provided with no liquid from the weight of detection chip 10 after the liquid was discharged. In addition, the specific gravity of the liquid was set to 1.0g/cm³. FIG. 12 shows a relationship between the distance between the bottom surface of channel 60 and the tip of pipette tip 170 and the amount of the liquid remaining in channel 60.

As illustrated in FIG. 12, as the distance between the tip of pipette tip 170 and the bottom surface of channel 60 increased, the amount of the liquid remaining in channel 60 increased. It is to be noted that, in detection chip 10 used for this experiment, the amount of the liquid remaining in channel 60 is preferably 6.5 µL or smaller from the viewpoint of measuring the detection object substance with high reliability.

As described above, by setting first reference part 180a to the bottom surface of channel 60 where the highest operation accuracy is required, the first position information of the tip of pipette tip 170 was highly accurately detected. In addition, it was suggested that the position of the tip of pipette tip 170 can be highly accurately controlled by setting first reference part 180a to the bottom surface of channel 60 where the highest operation accuracy is required, and that the accuracy of the detection result can be improved by uniformizing the amount of the liquid remaining in channel 60.

This application is entitled to and claims the benefit of Japanese Patent Application No. 2015-031692 filed on February 20, 2015, the disclosure each of which including the specification, drawings and abstract is incorporated herein by reference in its entirety.

### Industrial Applicability

The detection method and the reaction apparatus according to the embodiments of the present invention can measure a detection object substance with high reliability, for example. Accordingly, contribution to development, spread and progression of a very simple quantitative immunity measuring system is expected.

### Reference Signs List

10, 10' Detection chip
20 Prism
21 Incidence surface
22 Film formation surface
23 Emission surface
30 Metal film
40 Channel closure
41 Reaction region
42 Reagent storage region
43 Channel groove
44 First through hole
45 Second through hole
46 Recess
60 Channel
60' Well
70 Injection part
80 Storage part
100 SPFS apparatus
110 Liquid feeding part
111 Pipette
112 Pipette movement part
113 Liquid-feeding pump driving mechanism
114 Syringe
115 Plunger
116 Pipette nozzle
120 Conveyance part
121 Chip holder
122 Conveyance stage
130 Position information acquiring part
131 Air pressure sensor
140 Light irradiation part
141 Light source unit
142 Angle adjustment mechanism
143 Light source control part
150 Light detection part
151 Light reception unit
152 Position switching mechanism
153 Sensor control part
154 First lens
155 Optical filter
156 Second lens
157 Light receiving sensor
160 Control part
170 Pipette tip
180a First reference part
180b Second reference part
650 Installation surface
700 Gage block
α Excitation light
β Reflection light
γ Plasmon scattering light
δ Fluorescence

## Claims

1. A method of detecting a position of a tip of a pipette tip attached to a pipette nozzle and configured to suck or discharge liquid, the method comprising:
measuring a first pressure in the pipette tip at a time of sucking or discharging gas from the tip of the pipette tip in a state where the tip of the pipette tip and a reference part that is a solid are separated from each other;
measuring a second pressure in the pipette tip at a time of sucking or discharging gas from the tip of the pipette tip in a state where the tip of the pipette tip and the reference part are brought closer to each other in comparison with the state for measuring the first pressure; and
detecting the position of the tip of the pipette tip with respect to the reference part based on a difference between the first pressure and the second pressure after measuring the first pressure and the second pressure.

2. The method according to claim 1, wherein the reference part is a bottom surface of a housing part of a housing chip, the housing part being configured to house liquid sucked into the pipette tip and including an opening at a top surface of the housing chip.

3. The method according to claim 1, wherein the reference part is a seal of a housing chip including a housing part and the seal, the housing part being configured to house liquid sucked into the pipette tip and including an opening at a top surface of the housing chip, the seal being configured to seal the opening.

4. The method according to claim 1, wherein the reference part is a top surface of a housing chip, the housing part being configured to house liquid sucked into the pipette tip and including an opening at the top surface of the housing chip.

5. The method according to claim 1, wherein the reference part is a conveyance stage configured to convey a housing chip including a housing part configured to house liquid sucked into the pipette tip.

6. The method according to claim 1, wherein the reference part is an installation surface on which to install a conveyance stage configured to convey a housing chip including a housing part configured to house liquid sucked into the pipette tip.

7. A reaction apparatus configured to cause a reaction of two or more substances in a reaction chip by use of a pipette tip attached to a pipette nozzle and the reaction chip including a housing part configured to house liquid, the reaction apparatus comprising:
a chip holder configured to hold the reaction chip;
a pipette including a pipette nozzle to which the pipette tip is detachably attached;
a position information acquiring part including an air pressure sensor configured to measure an air pressure in the pipette tip connected with the pipette nozzle, the position information acquiring part being configured to acquire position information of a tip of the pipette tip; and
a pipette movement part configured to move the pipette, wherein:
the position information acquiring part acquires first position information representing a position of the tip of the pipette tip with respect to a first reference part that is a solid by measuring with the air pressure sensor a variation of the air pressure in the pipette tip at a time when the pipette sucks or discharges gas from the pipette tip while the pipette movement part changes a distance between the tip of the pipette tip and the first reference part; and
the pipette movement part moves the pipette based on the first position information to cause a reaction of two or more substances in the reaction chip after the position information acquiring part acquires the first position information.

8. The reaction apparatus according to claim 7, wherein:
the position information acquiring part acquires second position information representing a position of the tip of the pipette tip with respect to a second reference part that is liquid housed in the housing part by measuring with the air pressure sensor a variation of the air pressure in the pipette tip at a time when the pipette sucks or discharges gas from the pipette tip while the pipette movement part changes a distance between the tip of the pipette tip and the second reference part; and
the pipette movement part moves the pipette based on the first position information and the second position information to cause a reaction of two or more substances in the reaction chip after the position information acquiring part acquires the first position information and the second position information.

9. The reaction apparatus according to claim 8, wherein a pressure of gas sucked or discharged from the tip of the pipette tip in an operation of acquiring the first position information is different from a pressure of gas sucked or discharged from the tip of the pipette tip in an operation of acquiring the second position information.

10. The reaction apparatus according to claim 9, wherein:
when gas is sucked from the tip of the pipette tip in a case where the position information acquiring part acquires the first position information and the second position information, a pressure of gas sucked from the tip of the pipette tip in the operation of acquiring the first position information is lower than a pressure of gas sucked from the tip of the pipette tip in the operation of acquiring the second position information; and
when gas is discharged from the tip of the pipette tip in a case where the position information acquiring part acquires the first position information and the second position information, a pressure of gas discharged from the tip of the pipette tip in the operation of acquiring the first position information is higher than a pressure of gas discharged from the tip of the pipette tip in the operation of acquiring the second position information.
